# EUROPÄISCHE PATENTSCHRIFT

(11) **EP 1 360 026 B1**
(45) Veröffentlichungstag und Bekanntmachung des Hinweises auf die Patenterteilung: **20.10.2004**
(21) Anmeldenummer: 02712764.6
(22) Anmeldetag: 11.02.2002
(51) Int. Cl.: B23B 35/00, B24B 31/116, B23K 26/38, F02M 61/16

(54) **VERFAHREN ZUR HERSTELLUNG EINES LOCHS IN EINEM KÖRPER, INSBESONDERE EINES EINSPRITZLOCHS IN EINEM KRAFTSTOFFINJEKTOR**
METHOD FOR PRODUCING A HOLE IN A BODY, ESPECIALLY AN INJECTION HOLE IN A FUEL INJECTOR
PROCEDE DE FORAGE D'UN TROU DANS LE CORPS D'UNE PIECE, EN PARTICULIER, D'UN TROU D'INJECTION DANS UN INJECTEUR DE CARBURANT

(30) Priorität: 14.02.2001 DE 10106809
(43) Veröffentlichungstag der Anmeldung: 12.11.2003
(73) Patentinhaber: Siemens Aktiengesellschaft, 80333 München (DE)
(72) Erfinder: KLÜGL, Wendelin, 92358 Seubersdorf (DE); KULL, Eberhard, 85276 Pfaffenhofen (DE); SCHMUTZLER, Gerd, 93138 Kareth (DE)
(86) Internationale Anmeldenummer: PCT/DE2002/000487
(87) Internationale Veröffentlichungsnummer: WO 2002/070178

(56) Entgegenhaltungen:
- DE-A- 19 914 719
- US-A- 4 857 696
- US-A- 5 093 548
- US-A- 5 159 167
- US-A- 5 656 186
- US-A- 5 934 571
- US-A- 6 070 813
- US-B1- 6 365 871

## Beschreibung

] Die Erfindung betrifft ein Verfahren zur Herstellung eines Lochs in einem Körper insbesondere eines Einspritzlochs in einem Kraftstoffinjektor, gemäß Oberbegriff der Ansprüche 1 und 3. Solche Verfahren sind aus Dokument US-A-6 070 813 bekannt. Das Verfahren soll geeignet sein, ein Loch mit einem Durchmesser kleiner als 0,5 Millimeter und mit einem Verhältnis von Länge zu Durchmesser von größer als 3 zu erzeugen.

Es ist beispielsweise aus D. Potz at al. "Diesel Nozzle - The Determining Interface between Injection System and Combustion Chamber", THIESEL 2000, Thermofluidynamic Processes in Diesel Engines, Seiten 249 bis 258 bekannt, ein Einspritzloch eines Kraftstoffinjektors herzustellen, indem zunächst das Loch durch einen EDM-Prozess (Electro Discharge Machining) erzeugt wird, bei dem durch Funkenentladung ein Teil des Kraftstoffinjektors erhitzt wird und das dabei verdampfte Material von einem Dielektrikum fortgeschwemmt wird. Durch diesen Prozess werden Größe und Form des Lochs im wesentlichen festgelegt. Üblicherweise dauert der EDM-Prozess über 40 Sekunden, um das Loch mit der richtigen Geometrie und einer geringen Formtoleranz zu erzeugen. Anschließend wird ein Verrundungsprozess (Hydro-Erosive grinding) durchgeführt, bei dem ein mit Schleifpartikeln versehenes Medium durch das Loch gepresst wird.

Dauert der Verrundungsprozess kurze Zeit, so werden Kanten der Öffnung des Lochs verrundet. Bei der Locherzeugung wird normalerweise dieser kurze Verrundungsprozess verwendet, um Alterungsprozesse vorwegzunehmen. Wird der Verrundungsprozess etwas länger durchgeführt, so werden Oberflächenrauheiten der Flächen des Kraftstoffinjektors, die das Loch bilden, geglättet. Solche Oberflächenrauheiten weisen typischerweise Höhendifferenzen von bis zu 3 µm auf. Durch einen zeitlich noch längeren Verrundungsprozess kann der Durchmesser des Lochs etwas vergrößert werden. Dadurch kann der gewünschte Durchfluss von Kraftstoff durch das Lochs beim Betrieb des Kraftstoffinjektors fein eingestellt werden. Der Durchfluss ist die Menge an Kraftstoff, die pro Zeiteinheit bei einer bestimmten Temperatur und bei einer bestimmten Druckdifferenz durch das Loch fließt. Wird der Verrundungsprozess jedoch noch länger durchgeführt, so kommt es zu einer unkontrollierten Vergrößerung des Lochs, durch die die Symmetrie des Lochs zerstört wird. Das Loch weist dann große Geometriefehler auf.

Es hat sich gezeigt, dass zur Vermeidung einer unkontrollierten Vergrößerung des Lochs der Verrundungsprozess höchstens so lange durchgeführt werden darf, bis die radiale Dicke des Materials, das von den Flächen des Kraftstoffinjektors, die das Loch bilden, entfernt wird, 5 µm beträgt. Üblicherweise dauert der Verrundungsprozess etwa 30 Sekunden.

Der Erfindung liegt die Aufgabe zu Grunde, ein Verfahren zur Erzeugung eines Lochs in einem Körper anzugeben, das im Vergleich zum Stand der Technik schneller ist.

Die Aufgabe wird, gemäß Ansprüchen 1 oder 3 gelöst. Vorteilhafte Ausführungen der erfindungsgemäßen Verfahren sind in den Unteransprüchen 2 und 4-9 beschrieben.

Bei einem Percussionbohrprozess wird ein kurzer, z. B. etwa 100 µsec langer Laserpuls auf den Körper gerichtet. Der Percussionbohrprozess kann mehrere solche aufeinanderfolgende Pulse aufweisen. Es sind jedoch nur wenige, bis zu z. B. 10 aufeinanderfolgende Pulse vorgesehen, damit der Percussionbohrprozess nicht länger als 3 sec dauert. Die Position des Laserstrahls wird während des Prozesses nicht verändert, so dass ein Loch erzeugt wird, dessen Querschnitt mit dem Fokus des Laserstrahls übereinstimmt.

Bei einem Trepanierbohrprozess wird ein konstanter Laserstrahl auf den Körper gerichtet. Der Körper wird während der Bestrahlung relativ zum Laserstrahl bewegt. Der Fokus des Laserstrahls ist kleiner als der Querschnitt des Lochs, das durch den Trepanierbohrprozess erzeugt wird.

Ein durch einen kurzen Percussionbohrprozess oder Trepanierbohrprozess erzeugtes Loch weist eine sehr große Formtoleranz auf, d. h., die Flächen des Körpers, die das Loch bilden, weisen Unebenheiten auf. Durch die Unebenheiten, die die Form von Aus- und Einbuchtungen haben, schwankt der Durchmesser des Lochs um bis zu 25 µm. Der nachfolgende Glättungsprozess, durch den die Unebenheiten im wesentlichen entfernt werden, trägt aufgrund der Größe der Unebenheiten maßgeblich zur endgültigen Form und Größe des Lochs bei. Beispielsweise nimmt durch den Glättungsprozess der Durchfluss von Kraftstoff durch das Loch um mindestens 30% oder 35%, besser 50%, zu. Der Glättungsprozess führt zusätzlich dazu, dass Kanten der Öffnung des Lochs abgerundet werden und dass der Alterungsprozess des Körpers vorweggenommen wird, so dass ein zusätzlicher Verrundungsprozess nach Erzeugung des Lochs nicht erforderlich ist.

Der Erfindung liegt die überraschende Erkenntnis zugrunde, dass ein durch kurzes Percussionbohren ober Trepanierbohren erzeugtes Loch einem Glättungsprozess ausgesetzt werden kann, durch den in radialer Richtung bis zu 30 µm Material entfernt wird, ohne dass es zu einer unkontrollierten Vergrößerung des Lochs kommt.

Aufgrund der geringen Dauer des Percussionbohrprozesses bzw. Trepanierbohrprozesses kann das Verfahren zur Erzeugung eines Lochs sehr schnell sein.

Die zeitliche Dauer des Glättungsprozesses kann durch Vergrößerung des Drucks des Mediums und/oder der Dichte der Schleifteilchen verringert werden.

Beispielsweise wird der Glättungsprozess mit einem Druck zwischen 100 und 300 bar und mit einem viskoelastischen Medium, wie zum Beispiel das Schleifmittel der Firma Extrude Hone, durchgeführt. Der Glättungsprozess dauert zwischen 20 und 100 Sekunden.

Alternativ wird der Glättungsprozess bei einem Druck zwischen 80 und 200 bar mit einem flüssigen, vorzugsweise hochviskosen Medium durchgeführt, wie zum Beispiel Prüföl. Der Glättungsprozess dauert zwischen 40 und 90 Sekunden.

Vorzugweise dauert der Percussionbohrprozess nicht länger als eine Sekunde. Durch den sehr kurzen Percussionbohrprozess bildet sich eine gehärtete Schicht direkt unter den Flächen des Körpers, die das Loch bilden. Diese Schicht entsteht durch die schnelle Abkühlung des nur kurzzeitig durch den Laserstrahl erhitzten Materials um das Loch. Das restliche Material des Körpers wirkt dabei als Kühlkörper. Je länger der Percussionbohrprozess dauert, umso mehr erhitzt sich der ganze Körper und umso langsamer kühlt folglich das Material um das Loch nach einem Puls ab.

Die gehärtete Schicht kann zwischen 10 µm und 50 µm dick sein. Da die Schicht gehärtet ist, kann der Glättungsprozess über lange Zeit und/oder mit hohem Druck und/oder mit einem hochviskosen oder viskoelastischen Material durchgeführt werden, ohne dass das Loch unrund wird und eine unkontrollierte Vergrößerung erfährt. Nach dem Glättungsprozess kann ein Teil der gehärteten Schicht übrig bleiben.

Es hat sich gezeigt, dass auch bei einem Percussionbohrprozess zwischen einer Sekunde und 3 Sekunden ein Glättungsprozess möglich ist, bei dem Material in einer radialen Dicke von 10 µm oder mehr abgetragen werden kann, ohne dass das Loch unrund wird und eine unkontrollierte Vergrößerung erfährt.

Als Körper kann beispielsweise ein Kraftstoffinjektor verwendet werden. Das Loch kann als Einspritzloch erzeugt werden. Alternativ kann das Loch zum Beispiel als Drossel eines Kraftstoffinjektors erzeugt werden.

Im folgenden wird ein Ausführungsbeispiel der Erfindung anhand der Figuren näher erläutert.
- Figur 1: zeigt einen Querschnitt durch ein Loch eines Kraftstoffinjektors mit einer gehärteten Schicht, nachdem ein Percussionbohrprozess durchgeführt wurde.
- Figur 2: zeigt den Querschnitt aus Figur 1, nachdem ein Glättungsprozess durchgeführt wurde.

Im Ausführungsbeispiel wird ein Kraftstoffinjektor K bereitgestellt und in eine Laserbohrmaschine eingespannt. Mit Hilfe der Laserbohrmaschine wird ein Percussionbohrprozess durchgeführt mit drei circa 100 µsec langen aufeinanderfolgenden Pulsen. Der Percussionbohrprozess dauert insgesamt etwa eine Sekunde.

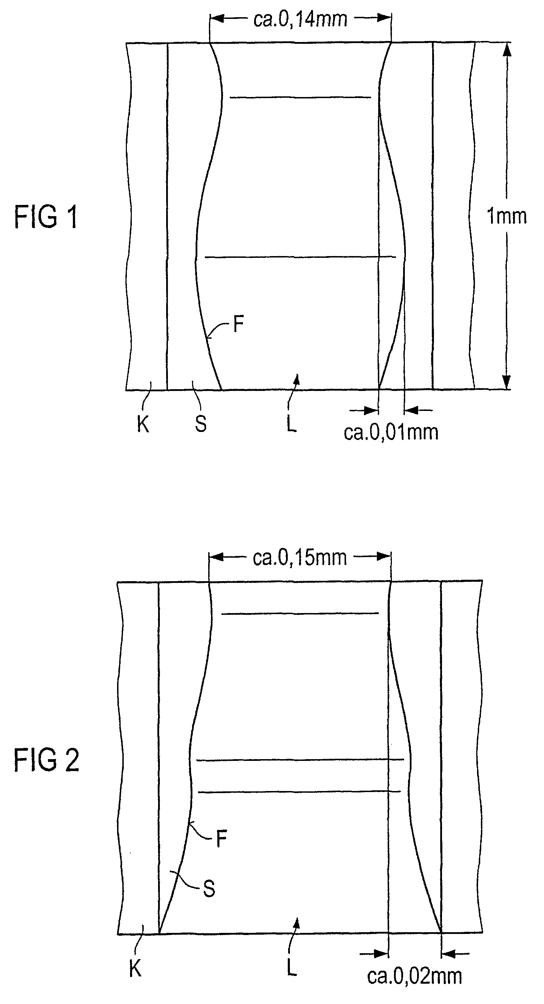

Durch den Percussionbohrprozess wird im Kraftstoffinjektor K ein Loch L erzeugt. Das Loch L weist Unebenheiten in Form von Ein- und Ausbuchtungen auf, so dass der Durchmesser des Lochs L zwischen 130 µm und 150 µm schwankt (siehe Figur 1).

Durch den Percussionbohrprozess wird unter den Flächen F des Kraftstoffinjektors K, die das Loch L bilden, eine circa 20 µm dicke gehärtete Schicht S gebildet.

Anschließend wird ein Glättungsprozess durchgeführt, bei dem ein Schleifmittel der Firma Extrude Hone mit einem Druck von circa 140 bar durch das Loch L circa 70 Sekunden lang gepresst wird. Die Strömung verläuft von unten nach oben. Dadurch werden die Unebenheiten der Flächen des Lochs L im wesentlichen abgetragen (siehe Figur 2). Der Durchmesser des Lochs L ändert sich im wesentlichen gleichmäßig zwischen 150 µm und 170 µm. Die früheren Unebenheiten sind noch erkennbar an z.B. der leichten Ausbuchtung in der Mitte des Lochs L. Ein Teil der gehärteten Schicht S ist auch nach dem Glättungsprozess noch vorhanden.

Im Vergleich zum Loch L vor dem Glättungsprozess beträgt die Zunahme des Durchflusses von Diesel bei einer Temperatur von 40°C und einem Druckunterschied von 100 bar circa 40%.

## Patentansprüche

1. Verfahren zur Herstellung eines Lochs in einem Körper, insbesondere eines Einspritzlochs in einem Kraftstoffinjektor bei dem mit Hilfe eines Lasers durch einen Percussionbohrprozess das Loch (L) erzeugt wird,
**dadurch gekennzeichnet, dass** der Percussionbohrprozess weniger als 3 sec dauert, und dass nach dem Percussionbohrprozess ein Glättungsprozess durchgeführt wird, indem ein mit Schleifteilchen versetztes Medium unter Druck durch das Loch (L) gepresst wird, bis Unebenheiten von Flächen (F) des Körpers, die das Loch (L) bilden, im wesentlichen abgeschliffen sind.

2. Verfahren nach Anspruch 1,
- bei dem der Percussionbohrprozess nicht länger als 1 sec dauert.

3. Verfahren zur Herstellung eines Lochs in einem Körper, insbesondere eines Einspritzlochs in einem Kraftstoffinjektor, bei dem mit Hilfe eines Lasers durch einen Trepanierbohrprozess das Loch (L) erzeugt wird, **dadurch gekennzeichnet, dass** der Trepanierbohrprozess weniger als 10 sec dauert, und dass nach dem Trepanierbohrprozess ein Glättungsprozess durchgeführt wird, indem ein mit Schleifteilchen versetztes Medium unter Druck durch das Loch (L) gepresst wird, bis Unebenheiten von Flächen (F) des Körpers, die das Loch (L) bilden, im wesentlichen abgeschliffen sind.

4. Verfahren nach einem der Ansprüche 1 bis 3,
- bei dem der Glättungsprozess derart durchgeführt wird, dass durch den Glättungsprozess der Durchfluss von Kraftstoff durch das Loch (L) um mindestens 30% zunimmt.

5. Verfahren nach Anspruch 4,
- bei dem durch den Glättungsprozess in radialer Richtung Material in einer Dicke von mehr als 5µm von den Flächen (F) des Körpers, die das Loch (L) bilden, entfernt wird.

6. Verfahren nach einem der Ansprüche 1 bis 5,
- bei dem der Glättungsprozess bei einem Druck zwischen 100 bar und 300 bar und mit einem viskoelastischen Medium durchgeführt wird,
- bei dem der Glättungsprozess zwischen 20 sec und 100 sec dauert.

7. Verfahren nach einem der Ansprüche 1 bis 5,
- bei dem der Glättungsprozess bei einem Druck zwischen 80 bar und 200 bar und mit einem flüssigen Medium durchgeführt wird,
- bei dem der Glättungsprozess zwischen 40 und 90 sec dauert.

8. Verfahren nach einem der Ansprüche 1 bis 7,
- bei dem als Körper ein Kraftstoffinjektor (K) verwendet wird,
- bei dem das Loch (L) als Einspritzloch erzeugt wird.

9. Verfahren nach einem der Ansprüche 1 bis 7,
- bei dem das Loch (L) als Drossel eines Kraftstoffinjektors erzeugt wird.

## Claims

1. A method for manufacturing a hole in a body, in particular an injection hole in a fuel injector, said hole (L) being produced by means of a percussion drilling process with the aid of a laser, **characterized in that**
the percussion drilling process lasts less than 3 seconds, and that a smoothing process is carried out after the percussion drilling process by forcing a particle-carrying medium under pressure through the hole (L) until unevennesses of surfaces (F) of the body are substantially abraded, said surfaces forming the hole (L).

2. The method according to Claim 1,
- wherein the percussion drilling process lasts no longer than 1 second.

3. A method for manufacturing a hole in a body, in particular an injection hole in a fuel injector, said hole (L) being produced by means of a trepanning process with the aid of a laser, **characterized in that**
the trepanning process lasts less than 10 seconds,
and that a smoothing process is carried out after the trepanning process by forcing a particle-carrying medium under pressure through the hole (L) until unevennesses of surfaces (F) of the body are substantially abraded, said surfaces forming the hole (L).

4. The method according to one of Claims 1 to 3,
- wherein the smoothing process is carried out in such a way that the flow of fuel through the hole (L) increases by at least 30% as a result of the smoothing process.

5. The method according to Claim 4
- wherein material having a thickness of more than 5 µm is removed from the surfaces (F) of the body in a radial direction by means of the smoothing process, said surfaces forming the hole (L).

6. The method according to one of Claims 1 to 5,
- wherein the smoothing process is carried out at a pressure between 100 bar and 300 bar using a viscoelastic medium,
- wherein the smoothing process lasts between 20 seconds and 100 seconds.

7. The method according to one of Claims 1 to 5,
- wherein the smoothing process is carried out at a pressure between 80 bar and 200 bar using a liquid medium,
- wherein the smoothing process lasts between 40 seconds and 90 seconds.

8. The method according to one of Claims 1 to 7,
- wherein a fuel injector (K) is used as a body,
- wherein the hole (L) is produced as an injection hole.

9. The method according to one of Claims 1 to 7,
- wherein the hole (L) is produced as a choke of a fuel injector.

## Revendications

1. Procédé pour la fabrication d'un trou dans un corps, en particulier d'un orifice d'injection dans un injecteur de carburant, dans lequel le trou (L) est produit avec l'aide d'un laser par un processus de perçage par percussion,
**caractérisé en ce que** le processus de perçage par percussion dure moins de 3 secondes et qu'après le processus de perçage par percussion, un processus de lissage est réalisé, en pressant un milieu avec des particules abrasives sous pression à travers le trou (L), jusqu'à ce que les rugosités des surfaces (F) du corps, qui forment le trou (L), sont pour l'essentiel abrasées.

2. Procédé selon la revendication 1, dans lequel le processus de perçage par percussion ne dure pas plus de 1 seconde.

3. Procédé pour la fabrication d'un trou dans un corps, en particulier d'un orifice d'injection dans un injecteur de carburant, dans lequel le trou (L) est produit avec l'aide d'un laser par un processus de perçage par trépanation,
**caractérisé en ce que** le processus de perçage par trépanation dure moins de 10 secondes et qu'après le processus de perçage par trépanation, un processus de lissage est réalisé, en pressant un milieu avec des particules abrasives sous pression à travers le trou (L), jusqu'à ce que les rugosités des surfaces (F) du corps, qui forment le trou (L), sont pour l'essentiel abrasées.

4. Procédé selon l'une des revendications 1 à 3, dans lequel le processus de lissage est réalisé de telle façon que par le processus de lissage, le flux de carburant par le trou (L) augmente d'au moins 30%.

5. Procédé selon la revendication 4, dans lequel par le processus de lissage, du matériau est enlevé des surfaces (F) du corps, qui forment le trou (L), sur une épaisseur de plus de 5µm dans la direction radiale.

6. Procédé selon l'une des revendications 1 à 5,
- dans lequel le processus de lissage est réalisé avec une pression entre 100 bar et 300 bar et avec un milieu viscoélastique,
- dans lequel le processus de lissage dure entre 20 secondes et 100 secondes.

7. Procédé selon l'une des revendications 1 à 5,
- dans lequel le processus de lissage est réalisé avec une pression entre 80 bar et 200 bar et avec un milieu liquide,
- dans lequel le processus de lissage dure entre 40 et 90 secondes.

8. Procédé selon l'une des revendications 1 à 7,
- dans lequel un injecteur de carburant (K) est utilisé comme corps,
- dans lequel le trou (L) est produit comme orifice d'injection.

9. Procédé selon l'une des revendications 1 à 7, dans lequel le trou (L) est produit comme étranglement d'un injecteur de carburant.
